# FASCICULE DE BREVET EUROPEEN

(11) **EP 0 625 420 B1**
(45) Date de publication et mention de la délivrance du brevet: **23.09.1998**
(21) Numéro de dépôt: 94401029.7
(22) Date de dépôt: 10.05.1994
(51) Int. Cl.: B29C 47/72, B05C 11/10, F16K 11/085, F16K 11/087

(54) **Procédé et dispositif pour l'extrusion d'un cordon profilé calibré en polymère thermoplastique**
Verfahren und Vorrichtung zum Extrudieren eines kalibrierten Profilstranges aus thermoplastischem Polymer
Method and device for extrusion of a gauged profiled strip made of thermoplastic polymer

(30) Priorité: 10.05.1993 DE 4315469
(43) Date de publication de la demande: 23.11.1994
(73) Titulaire: SAINT-GOBAIN VITRAGE, 92400 Courbevoie (FR)
(72) Inventeur: Kotte, Rolf, Dr., D-52477 Alsdorf-Begau (DE); Cornils, Gerd, D-52399 Merzenich (DE); Stumpe, Thomas, D-52399 Merzenich (DE)
(74) Mandataire: Breton, Jean-Claude

(56) Documents cités:
- EP-A- 0 132 958
- EP-A- 0 224 916
- EP-A- 0 524 092
- DE-A- 1 937 862
- FR-A- 732 753
- FR-A- 2 366 502
- PATENT ABSTRACTS OF JAPAN vol. 8, no. 158 (M-311) (1595) 21 Juillet 1984 & JP-A-59 054 535 (HASHIMOTO FORMING KOGYO K.K.) 29 Mars 1984

## Description

L'invention concerne un procédé pour extruder un profilé calibré en polymère thermoplastique sur un support dans lequel le support est positionné dans la zone de travail d'un robot, procédé qui permet la fusion d'un polymère dans une extrudeuse, son transport dans un tuyau haute pression chauffé jusqu'à une tête d'extrusion chauffée guidée par un robot et son dépôt sur le support.

L'invention concerne également le dispositif pour exécuter le procédé ainsi que le produit obtenu. Un procédé du type précédent est décrit dans la demande de brevet européen EP-A-0 524 092, il s'agit de l'extrusion d'un cadre ou d'une partie de cadre sur un vitrage. Dans ce document on décrit également comment le procédé permet de déposer des cordons en polymère thermoplastique en particulier en élastomère thermoplastique sur des supports divers par exemple pour réaliser des joints pour des portières de voiture, pour des couvercles de coffres ou des toits ouvrants d'automobiles, de même que pour déposer des profilés d'étanchéité sur divers objets.

Dans le procédé en question, après l'arrêt de l'extrusion sur un objet donné, avant que la tête d'extrusion soit soulevée de l'objet, ou juste à l'instant où elle l'est, le débit du polymère fluidifié est interrompu suite à un ordre donné au moteur, le débit n'étant rétabli qu'après que la tête d'extrusion ait été mise en position sur l'objet suivant où elle peut commencer son déplacement.

Cette manière de procéder dans laquelle le débit s'arrête sur tout le circuit de matière fluide pendant le changement de substrat n'est pas sans inconvénient. A cause de l'inertie du système et par suite de l'incompressibilité des liquides, les éléments chauffés comme le tuyau haute pression subissent des déformations sous les pressions élevées qui ont pour conséquence d'entraîner des irrégularités dans le fonctionnement et en particulier dans le débit qui se concrétisent par des profils défectueux des cordons extrudés qui ont pour conséquence une qualité médiocre.

Dans le document EP-A-0 132 958, on présente une vanne à trois voies qui permet d'orienter rapidement un flux de liquide, soit vers une buse destinée à déposer le liquide sur une surface, soit vers un office d'évacuation du fluide. Comme la nature du fluide et la conception de l'installation permettent de maintenir une pression constante à l'intérieur de la vanne, il est possible, malgré l'absence de tout dispositif annexe en dehors des obturateurs des deux orifices de sortie, d'obtenir avec la vanne de EP-A-0 132 958 un dépôt uniforme et une perte minimum de matière à la fin de l'enduction.

Dans le document JP 59-54535, on présente une vanne à trois voies avec un noyau cylindrique qui comporte un évidement à sa périphérie. Cependant, la conception de la vanne ne permet pas de transférer le débit de manière continue d'une sortie à l'autre. Le débit décroît sur l'une des canalisations, puis s'arrête avant de commencer puis enfin de croître sur l'autre.

Dans la demande de brevet EP-A-0 224 916, on propose de maîtriser le flux de matière (colle thermofusible) dans une tête d'extrusion en prévoyant dans celle-ci une chambre avec deux vannes qui commandent chacune une sortie, l'une vers la buse et l'autre vers un circuit de retour et en commandant les deux vannes avec un léger retard de l'une par rapport à l'autre.

L'invention se donne pour tâche de développer et d'améliorer le procédé connu pour extruder un profilé calibré en polymère thermoplastique, de manière à accroître la sécurité de production du procédé pour améliorer la qualité du profilé extrudé et raccourcir les temps de fabrication.

L'invention propose un procédé tel que décrit dans la revendication 1 pour extruder un profilé calibré en polymère thermoplastique sur un support dans lequel le support est positionné dans la zone de travail d'un robot, procédé qui permet la fusion d'un polymère dans une extrudeuse, et son transport par un tuyau haute pression chauffant jusqu'à une tête d'extrusion chauffée guidée par un robot et son dépôt sur le support, procédé qui comporte entre le transport du polymère et son extrusion un passage dans une vanne trois voies pour orienter le flux de matériau soit vers une buse soit vers un canal d'évacuation, ladite vanne comportant un espace ou évidemment qui permet de maintenir le canal d'alimentation (26) en liaison avec la buse (9) et le canal d'évacuation (28) pendant la commutation dans la vanne trois voies.

Le procédé de l'invention permet d'avoir un fonctionnement continu de l'extrudeuse et de son circuit aval de telle sorte que des conditions stationnaires de fonctionnement puissent être établies puis maintenues sans aucune interruption ni modification.

On obtient de la sorte une température constante et des conditions de fusion ou de débit toujours identiques aussi bien qu'une pression constante et un débit volumique stable dans tout le système. Grâce à cette stabilité de tous les paramètres importants du procédé on obtient dès le début de chaque phase d'extrusion un cordon profilé avec la section souhaitée et de même à la fin de la phase d'extrusion la section de ce même profilé est la bonne.

Il est possible pendant l'interruption du procédé d'extrusion de jeter le matériau issu de la tête d'extrusion. Il est cependant préférable de récupérer le matériau évacué, c'est-à-dire de le faire revenir jusqu'à l'extrudeuse. Ceci peut être obtenu soit en reconduisant le matériau fluidifié par un tube chauffé et une pompe directement dans l'extrudeuse, soit en laissant solidifier le matériau et en le transformant en granulés pour, par exemple le conduire par un système pneumatique jusqu'à l'entrée de l'extrudeuse où il est ajouté aux autres matériaux neufs. Il est évident que les granulés peuvent d'abord être stockés pour être réintroduits ultérieurement ou même être utilisés pour un autre usage.

Lors de l'exploitation du procédé de l'invention, on obtient ainsi que la perte de charge sur les différents circuits suivis par le matériau fluide soit la même, qu'il s'agisse d'un côté du circuit conduisant de l'extrudeuse par le tube haute pression chauffé jusqu'à la buse de la tête d'extrusion et d'un autre côté de celui qui va de l'extrudeuse par le même tube haute pression jusqu'à la sortie du matériau expulsé par un bypass. Cela suppose par exemple que la section des tubes, que leur température, que les phénomènes liés au pompage du matériau issu du bypass doivent être réglés de telle manière que globalement la perte de charge soit la même que sur le circuit principal.

Pour mettre en oeuvre le procédé de l'invention le dispositif tel que décrit dans la revendication 6 comporte une extrudeuse alimentant en matériau fondu, successivement un tuyau haute pression chauffant et une tête d'extrusion avec une buse qui est déplacée par un robot sur le support, la tête d'extrusion comportant un canal d'alimentation par où circule le matériau fondu ainsi qu'une vanne trois voies pour l'orienter soit vers la buse, soit vers le canal d'évacuation et dans lequel la vanne trois voies est équipée d'un espace ou évidemment qui permet de maintenir le canal d'alimentation (26) en liaison avec la buse (9) et le canal d'évacuation (28) pendant la commutation dans la vanne trois voies.

Les détails de l'invention sont fournis par la description qui suit qui montre deux modes de réalisation, ils sont illustrés par les figures.

Parmi celles-ci :
- la figure 1 montre une installation pour mettre en oeuvre le procédé avec retour du flux de matériau fluidifié,
- la figure 2 présente une installation pour mettre en oeuvre le procédé avec retour du matériau après granulation,
- la figure 3 représente une tête d'extrusion avec un premier mode de réalisation d'une vanne adaptée au procédé,
- sur la figure 4 on voit le même dispositif que sur la figure 3 avec la vanne en position au début de la commutation,
- de même, la figure 5 présente toujours la même vanne en fin de commutation,
- la figure 6 montre la tête d'extrusion dans un autre mode de réalisation du procédé,
- la figure 7 montre la vanne de la figure 6, mais au début de la commutation,
- tandis que la figure 8 présente la même vanne en fin de commutation.

Les figures montrent comme substrat sur lequel le cordon profilé est extrudé, des vitrages 1 bombés sensiblement rectangulaires. Le cordon profilé doit être déposé à la périphérie, il est constitué d'un élastomère thermoplastique et a la forme d'un cadre. Comme il a été précisé plus haut le procédé de l'invention peut être utilisé sur d'autres supports et pour déposer des cordons profilés dont la fonction est différente. Cette remarque vaut pour toutes les caractéristiques qui seront développées par la suite.

Le vitrage 1 qui doit être équipé à sa périphérie d'un cadre profilé 3 est porté par un chariot support 2 qui permet de présenter successivement tous les vitrages à la station de travail, là où le cadre profilé 3 est extrudé. La préparation des vitrages se fait dans une station de travail non représentée dans laquelle le vitrage peut être chauffé si nécessaire et où la zone où doit être déposé le cordon profilé est nettoyée et éventuellement traitée avec un promoteur d'adhérence.

Dans la station de travail, là où le cordon profilé est extrudé, on trouve un robot 5 dont la tête d'extrusion 6 possède une buse 9 avec une ouverture 10 calibrée. C'est dans cette station que chaque vitrage 1 destiné à supporter le cordon extrudé est positionné avec soin. Dès que le vitrage 1 est dans la position précise souhaitée, la tête d'extrusion est déplacée sur le vitrage 1 par le robot 5 conformément à un programme précis. C'est la centrale de commande 12 qui fournit les ordres au robot 5 par l'intermédiaire du câble de commande 13.

La buse d'extrusion 9 conduite par le robot 5 sur le vitrage 1 qui aura éventuellement été porté auparavant à la température nécessaire, dépose le cordon fait d'un élastomère thermoplastique. La buse 9 est équipée d'un élément chauffant 11 qui lui permet de porter toute la tête d'extrusion à la température nécessaire pour que le polymère thermoplastique ait la viscosité souhaitée.

Le polymère thermoplastique nécessaire à l'extrusion est introduit sous forme de granulés dans la trémie 16 de l'extrudeuse à vis 17. Celle-ci va propulser l'élastomère fondu sous forte pression jusqu'à la tête d'extrusion. Le corps d'extrudeuse 18 qui contient la vis de l'extrudeuse 17 est entouré de plusieurs anneaux chauffants 19 ; ceux-ci maintiennent le corps d'extrudeuse 18 ainsi que la vis en rotation à l'intérieur à la bonne température.

La liaison entre le corps d'extrudeuse 18 et la tête d'extrusion est assurée par un tuyau haute pression 22 chauffé électriquement. Celui-ci est tel qu'il peut supporter des pressions de quelque 250 bars aux températures de fonctionnement. Par ailleurs, il doit être suffisamment flexible pour autoriser sans réaction le déplacement de la tête d'extrusion. De préférence, il est équipé à ses deux extrémités de raccords tournants 23, ceux-ci permettent d'encaisser les efforts de torsion qui s'exercent lorsque la tête d'extrusion se déplace autour du vitrage 1.

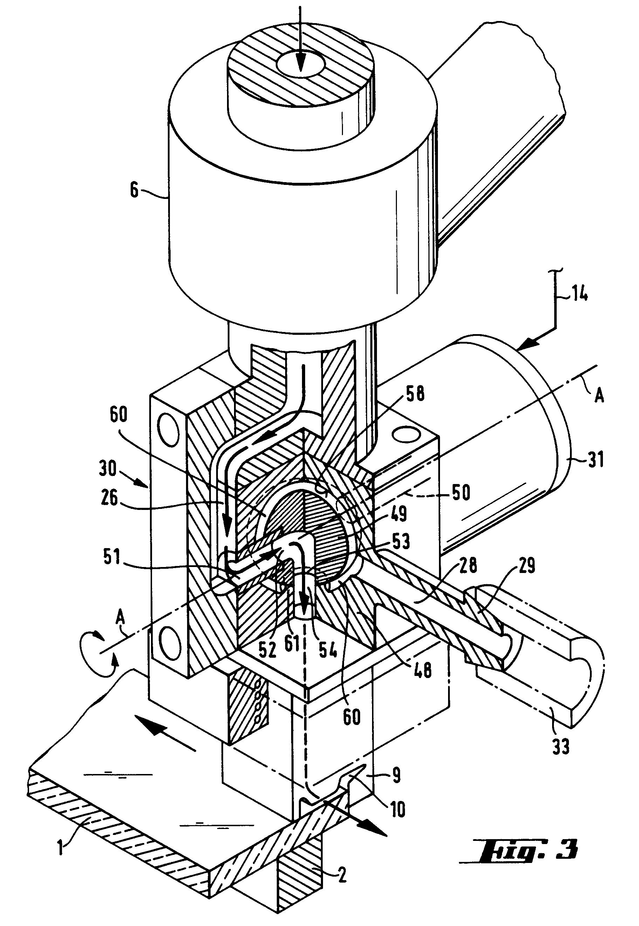

Comme on le voit en détail sur la figure 3 la tête d'extrusion est équipée latéralement d'un canal d'évacuation 28 pour le flux de matériau excédentaire, le canal 28 se termine par un ajutage 29. La tête d'extrusion comporte une vanne trois voies 30 commandée par un moteur 31 entre deux positions extrêmes. La position représentée sur la figure permet de diriger le flux de matériau entrant par le canal 26 dans la buse 9 d'où il sortira par l'ouverture 10. Dans l'autre position extrême la liaison avec la buse 9 est interrompue et c'est une liaison entre le canal 26 et le canal d'évacuation 28 qui est établie de telle sorte que le flux de matériau dans cette position de la vanne trois voies 30 est expulsé par le canal d'évacuation 28. La commande de la vanne 30 par le moteur 31 se fait à partir de la centrale de commande 12 par l'intermédiaire du câble 14 à l'instant précis où l'extrusion du cordon profilé 3 sur le vitrage 1 doit s'arrêter et où la tête d'extrusion doit être écartée du vitrage 1.

Le canal par où le flux de matériau transite dans la tête d'extrusion jusqu'à sa sortie par l'ajutage 29 du canal d'évacuation 28 doit être dimensionné de préférence de telle sorte que la perte de charge qui résulte du passage dans le canal corresponde à la perte de charge qui résulte du passage du flux de matériau par la buse d'extrusion elle-même. On réalise ainsi des conditions de dépôt optimales.

Dès que la vanne trois voies 30 a été tournée à la fin d'une phase d'extrusion, la tête d'extrusion est déplacée jusqu'à une position de repos au-dessus du vitrage 1. Dans cette position l'ajutage 29 s'engage dans un raccord 33. Le matériau issu de la vanne peut alors être évacué par le raccord 33 et grâce à un tube de liaison, rejoindre l'extrudeuse 17.

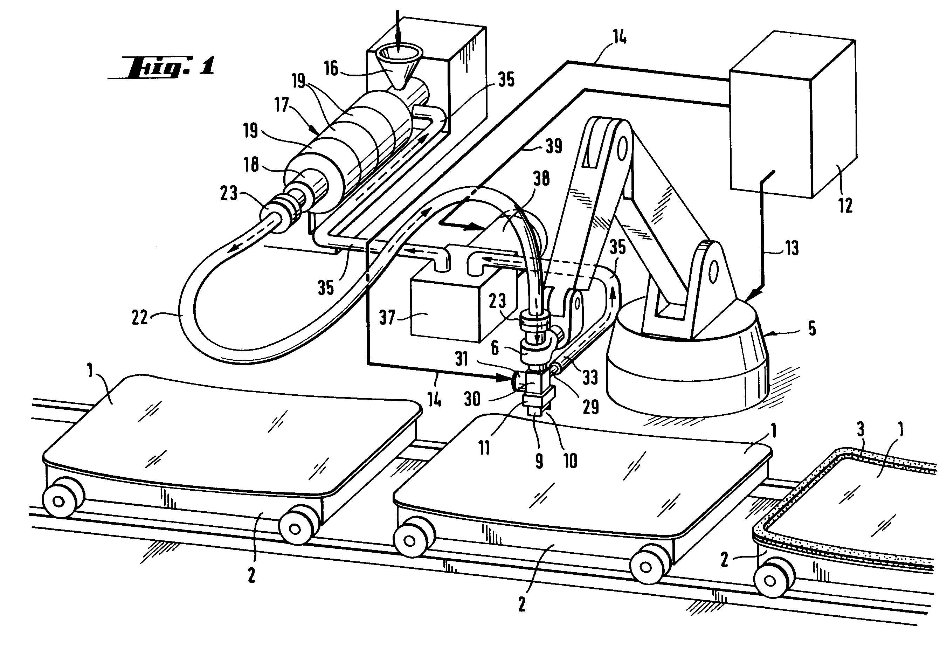

Le mode de réalisation de la figure 1 montre le raccord 33 associé à un canal de retour chauffant. Le canal 35 est maintenu à la température voulue par des résistances. De cette manière le matériau reste fluide et peut rejoindre l'extrudeuse 17. Pour entraîner le matériau fluide le long du canal 35 vers l'extrudeuse le système est équipé d'une pompe à engrenage 37 qui est commandée par le moteur 38. Celui-ci reçoit ses ordres par l'intermédiaire d'un câble 39 de la centrale de commande 12. Les commandes sont faites de telle manière que le canal 35 soit alimenté aussi longtemps que la tête d'extrusion est reliée par l'ajutage 29 au raccord 33.

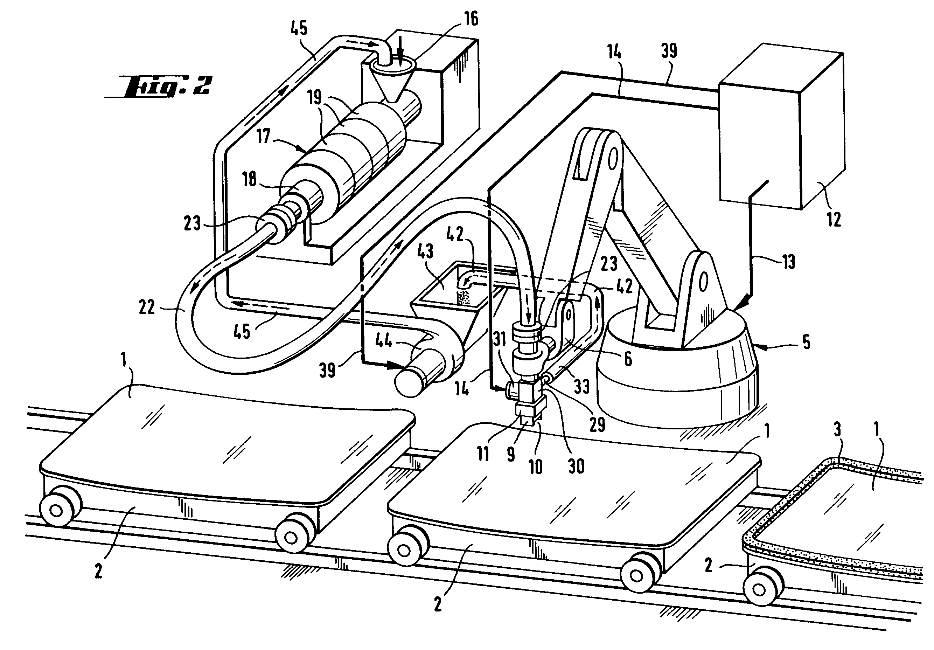

Le mode de réalisation représenté figure 2 montre un dispositif permettant l'extrusion d'un cordon profilé de polymère thermoplastique qui est identique à celui montré figure 1. Les éléments sont les mêmes que ceux de la figure 1. Ici, le raccord 33 qui est couplé au tube 28 lorsque la tête d'extrusion est en position de repos conduit à un tube chauffant 42 qui aboutit à une trémie 43. Le matériau thermoplastique transite par un système de refroidissement et de granulation non représenté et sort du tube 42 sous forme de granulés et tombe dans la trémie 43. Sous la trémie se trouve une soufflerie 44 qui transporte pneumatiquement les granulés par le tube 45 jusqu'à la trémie 16 de l'extrudeuse 17 dans laquelle ils vont être à nouveau fondus pour être extrudés.

Des élastomères thermoplastiques adaptés au procédé qui vient d'être décrit sont en particulier des élastomères polyoléfines à base de polypropylène isotactique et de caoutchouc étylène-propylène-diène. On les trouve dans le commerce sous le nom commercial de SANTOPRENE.

Comme il a déjà été mentionné les fortes pressions dans le système d'extrusion et les réactions élastiques de certains éléments en particulier du tuyau haute pression 22 rendent très important le fait que la commutation dans la vanne trois voies 30 se produise sans provoquer de pointe de pression dans le système. En effet, si pendant la phase de commutation, même pendant un temps très court il se produit une interruption du flux du matériau dans la vanne, cela entraîne immédiatement, à cause de l'alimentation permanente à partir de la vis de l'extrudeuse 17, une élévation de la pression dans le tuyau haute pression 22. Cette élévation entraîne une dilatation du tuyau et donc une augmentation de volume. Ce 〈〈 stockage 〉〉 de matériau entraîne au début de la phase suivante d'extrusion une alimentation en matériau qui n'est plus contrôlée. L'irrégularité qui en résulte sur le cordon empêche entre autres l'utilisation d'un dispositif automatique pour la mise en forme de la zone de raccord entre le début et la fin du cordon extrudé sur un vitrage.

En l'absence du système qu'on va décrire, les cordons extrudés avec des matériaux thermoplastiques montrent des irrrégularités qui, pour un cordon de 10 mm de hauteur, peuvent atteindre 0,5 mm sur une longueur de 10 mm. Pour éviter le phénomène décrit ci-dessus, la vanne trois voies 30 est conçue de telle sorte qu'au moment de la commutation les pointes de pression soient évitées. Les figures 3 à 8 montrent deux modes de réalisation de la vanne 30 qui résolvent le problème.

Les modes de réalisation de la vanne 30 représentés sur les figures 3 à 5 montrent à l'intérieur du carter 48 de la vanne un noyau en forme de bille 49 qui peut tourner autour de l'axe A-A. Pour celà, le noyau sphérique, est relié d'un côté au moteur de commande 31 et de l'autre possède un tourillon 51 qui est logé dans le carter 48. A l'intérieur du tourillon 51 se trouve une ouverture en forme de tube qui est en liaison avec le canal d'alimentation 26. Le flux de matériau peut ainsi traverser cette ouverture et pénétrer dans le canal 52 de la bille 49. Ce canal 52 est coudé à l'intérieur de la bille. Sur la figure 3 la position de la bille 49 est telle que la sortie 53 du canal 52 se trouve exactement au-dessus du perçage 54 prévu dans le carter 48 de la vanne. Le perçage 54 constitue un canal d'alimentation de la buse 9.

L'espace interne 58 du carter 48 est sphérique. Il a un diamètre supérieur à celui de la bille 49 de telle manière qu'entre la surface de la bille 49 et la surface interne du carter 48 un espace 60 soit ménagé. Au-dessus du perçage 54 se trouve un appui 61 en forme d'anneau sur lequel repose la bille 49, cet appui sert d'étanchéïté entre le canal 54 et la bille. Sur la figure 3 la position de la bille 49 est telle qu'elle permet un passage direct par l'intermédiaire du canal 52 vers la buse d'extrusion 59.

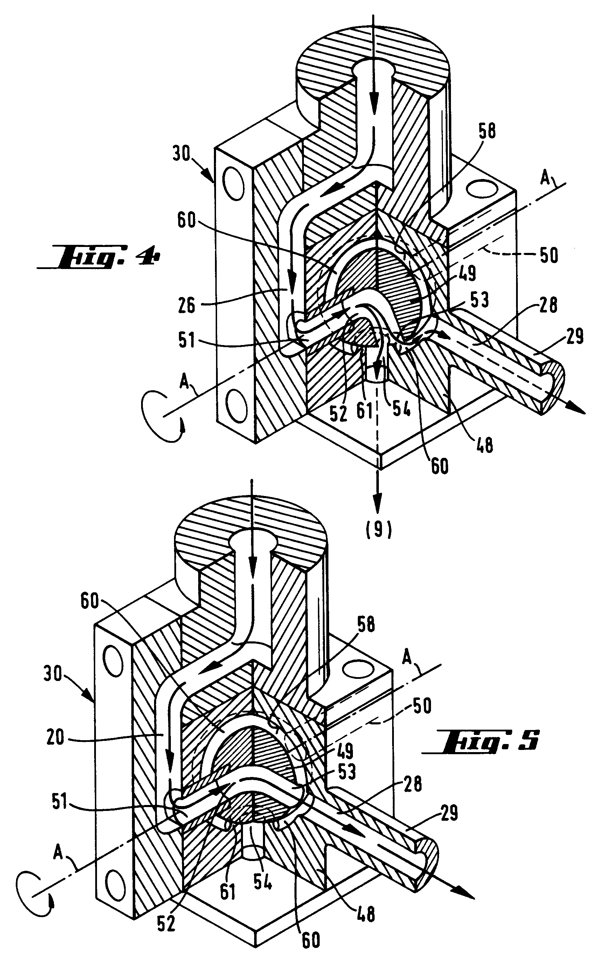

Comme on le voit figure 4 pendant la rotation de la bille 49 le flux de matériau n'est pas interrompu. En effet, alors qu'une partie de la sortie 53 est en liaison avec le perçage 54, une autre partie de la sortie 53 a déjà quitté la surface d'étanchéïté de l'appui annulaire 61 et a été mise en liaison avec l'espace interne 60, lui-même relié au canal d'évacuation 28. On voit qu'ainsi plus l'orifice du perçage 54 est masqué, plus la quantité du flux de matériau qui transite par l'espace 60 vers le canal d'évacuation 28 est importante.

Sur la figure 5 est représentée la position extrême du noyau sphérique à la fin d'une phase d'extrusion. Alors, la sortie 53 de la bille 49 se trouve juste en face du canal d'évacuation 28 tandis que l'ouverture du perçage 54 est entièrement obturée.

Avec le dispositif précédent, les essais ont montré que sur un cordon extrudé d'une épaisseur de l'ordre de 10 mm, on obtenait une irrégularité de cette épaisseur, meilleure que ± 1 mm sur 10 mm.

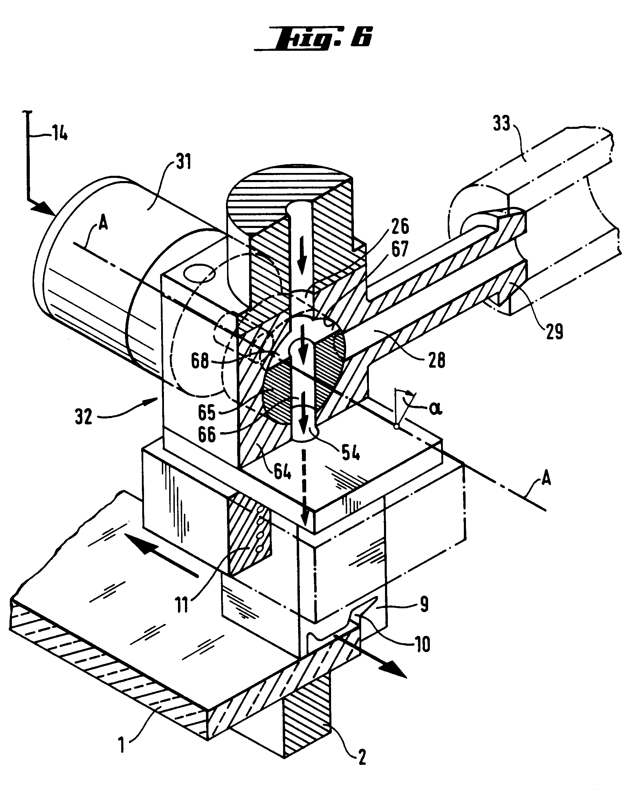

On peut obtenir le même effet que précédemment avec la vanne de commutation 32 représentée sur les figures 6 à 8. Ici, le canal d'alimentation 26 débouche dans le carter de la vanne 64 juste au-dessus du noyau cylindrique 65, c'est-à-dire en prolongement vertical du perçage 54 par où le matériau thermoplastique à extruder transite vers la buse d'extrusion 9. Le noyau 65 est équipé d'un perçage 66 perpendiculaire à l'axe du cylindre et qui sur la figure 6, relie le canal d'alimentation 26 avec le perçage de sortie 54. Le noyau 65 pivote autour d'un axe A-A grâce à un moteur de commande 31. Son angle de basculement est α.

Le noyau 65 est aplati du côté de l'entrée du matériau fluide. Selon une variante, il peut être équipé d'un évidement 68 ouvert vers le haut, I'évidement 68 étant à angle droit avec le perçage 66. Dans la position qu'occupe le noyau 65 sur la figure 6 cet évidement 68 constitue un espace limité par la paroi 67 du carter 69 de telle sorte que le matériau qui pénètre par le canal 26 dans le carter ne puisse sortir que par le perçage 66.

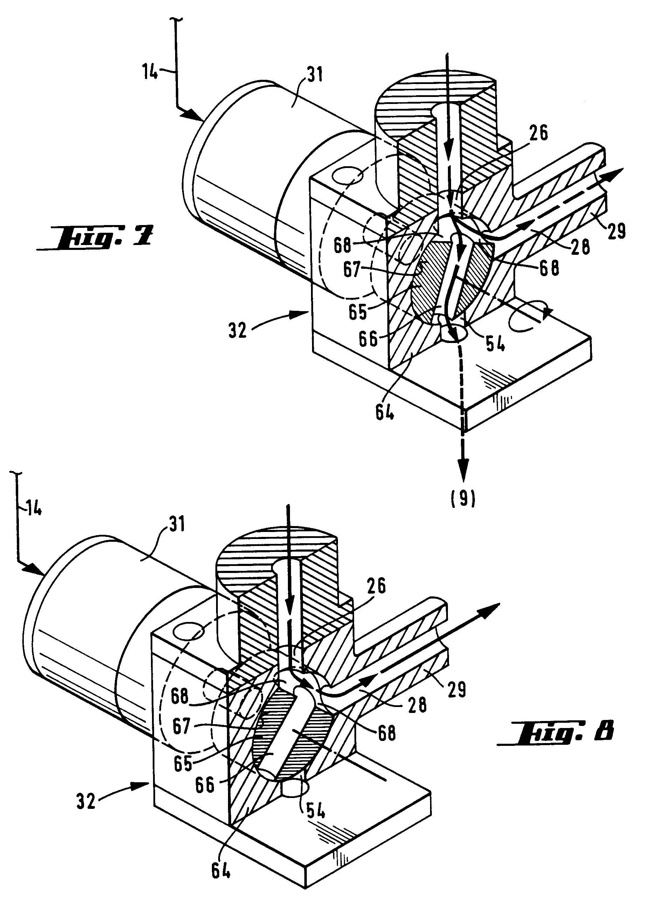

Dès le début de l'opération de commutation qui se produit à la fin d'une phase d'extrusion, on voit sur la figure 7 que, dans la mesure où la rotation du noyau 65 diminue la section disponible entre le perçage 66 et le perçage 54, dans la même mesure l'échappement de l'évidement 68 vers le canal d'évacuation 28 s'ouvre et ainsi le courant de matière issu du canal d'alimentation 26 reste inchangé, simplement la proportion entre ce qui sort par l'évidement 68 et par le canal 28 est modifié. Dans la position extrême du noyau 65 telle qu'elle est représentée figure 8, l'évidement 68 sert à réaliser la connexion complète du canal d'alimentation 26 avec le canal d'évacuation 28. Dans cette position le courant de matière à extruder ne peut plus rejoindre le perçage 54. Le matériau extrudé peut rejoindre l'ajutage 29 et la conduite qui y fait suite pour rejoindre l'extrudeuse 17.

Lors de la phase d'extrusion suivante, le moteur de commande 31 provoque la rotation du noyau 65 en sens inverse que précédemment et de nouveau le courant de matière peut sans interruption transiter par le perçage 66 entre la sortie 54 et la buse d'extrusion 9.

## Revendications

1. Procédé pour extruder un profilé calibré (3) en polymère thermoplastique sur un support (1) dans lequel le support est positionné dans la zone de travail d'un robot (5), procédé qui permet la fusion d'un polymère dans une extrudeuse (17), et son transport par un tuyau haute pression chauffant (22) jusqu'à une tête d'extrusion (6) chauffée guidée par un robot (5) et son dépôt sur le support (1), **caractérisé en ce qu'**il comporte entre le transport du polymère et son extrusion un passage dans une vanne trois voies (30, 32) pour orienter le flux de matériau soit vers une buse (9) soit vers un canal d'évacuation (28), ladite vanne comportant un espace ou évidemment (60, 68) qui permet de maintenir le canal d'alimentation (26) en liaison avec la buse (9) et le canal d'évacuation (28) pendant la commutation dans la vanne trois voies.

2. Procédé selon la revendication 1, **caractérisé en ce que** le matériau fondu évacué est recyclé dans l'extrudeuse.

3. Procédé selon la revendication 2, **caractérisé en ce que** le matériau fondu évacué est réintroduit dans l'extrudeuse par l'intermédiaire d'une pompe (37) et d'un canal de retour (35).

4. Procédé selon la revendication 1, **caractérisé en ce que** le matériau fondu évacué est refroidi et granulé.

5. Procédé selon la revendication 4, **caractérisé en ce que** les granulés sont transportés jusqu'à la trémie d'alimentation (16) de l'extrudeuse (17) pour y être réintroduits.

6. Dispositif pour extruder un profilé calibré en polymère thermoplastique sur un support (1) et comportant une extrudeuse (17) alimentant en matériau fondu, successivement un tuyau haute pression chauffant (22) et une tête d'extrusion (6) avec un canal d'alimentation (26) et une buse (9) qui est déplacée par un robot (5) sur le support, **caractérisé en ce que** la tête d'extrusion (6) comporte un canal d'alimentation (26) par où circule le matériau fondu ainsi qu'une vanne trois voies (30) pour l'orienter soit vers la buse (9), soit vers le canal d'évacuation (28) **et en ce que** la vanne trois voies (30, 32) est équipée d'un espace ou évidemment (60, 68) qui permet de maintenir le canal d'alimentation (26) en liaison avec la buse (9) et le canal d'évacuation (28) pendant la commutation dans la vanne trois voies.

7. Dispositif selon la revendication 6, **caractérisé en ce que** la vanne trois voies (30) possède un noyau (49) qui a la forme d'une bille avec un diamètre inférieur à celui de l'espace interne (58) où il se trouve, ce qui ménage un espace (60) entre le noyau (49) et la paroi de l'espace interne (58), **et en ce que** le noyau (49) est mobile en rotation autour d'un tourbillon creux (51) servant à l'entrée du matériau fondu et qui se prolonge par un canal coudé (52) à l'intérieur du noyau (49), le canal débouchant, lorsque le noyau (49) est dans une des positions extrêmes, sur un appui annulaire (61) faisant étanchéité autour d'une des sorties (54, 28) et conçu de manière que, lorsque le noyau quitte sa position extrême, le canal coudé (52) se trouve partiellement en communication avec l'espace (60), lui-même en communication avec l'autre sortie (28, 54).

8. Dispositif selon la revendication 6, **caractérisé en ce que** la vanne trois voies (32) possède un noyau (65) qui est sensiblement cylindrique, en rotation autour de son axe et traversé perpendiculairement à celui-ci par un perçage (66) qui, dans une des positions extrêmes du noyau relie le canal d'alimentation (26) du matériau fondu à l'une des sorties (54, 28) tandis que l'autre (28, 54) est obturée par le noyau (65) lui-même **et en ce que** la périphérie du noyau cylindrique (65) comporte un évidement (68) qui commence à connecter l'entrée du matériau fondu avec l'autre sortie dès que le noyau (65) commence son mouvement.

9. Dispositif selon l'une des revendications 6 à 8, **caractérisé en ce qu'**il est conçu de manière qu'à la fin d'une des phases d'extrusion, la tête d'extrusion mobile (6) mette le canal d'évacuation (28) en communication avec un raccord (33) par où le matériau fondu est évacué.

10. Dispositif selon la revendication 9, **caractérisé en ce que** le raccord (33) est relié à un tuyau haute pression chauffant (35) et à une pompe (37) qui renvoie le matériau fondu à l'extrudeuse (17).

11. Dispositif selon la revendication 9, **caractérisé en ce que** le raccord (33) est relié à un système de refroidissement et de fabrication de granulés.

12. Dispositif selon la revendication 11, **caractérisé en ce qu'**un système transporteur pneumatique (44, 45) mène les granulés vers la trémie (16) de l'extrudeuse (17).

## Claims

1. Method for extruding a calibrated profiled section (3) made from thermoplastic polymer on a support (1), in which the support is positioned in the working area of a robot (5), a method which affords the fusion of a polymer in an extruder (17) and its transportation by means of a high-pressure heating pipe (22) as far as a heated extrusion head (6) guided by a robot (5) and its placing on the support (1), characterised in that it includes, between the transportation of the polymer and its extrusion, passage through a three-way valve (30, 32) in order to orient the flow of material either to a nozzle (9) or to a discharge duct (28), the said valve having a space or recess (60, 68) which keeps the feed duct (26) in connection with the nozzle (9) and discharge duct (28) during the switching in the three-way valve.

2. Method according to Claim 1, characterised in that the discharged molten material is recycled in the extruder.

3. Method according to Claim 2, characterised in that the discharged molten material is re-introduced into the extruder by means of a pump (37) and a return duct (35).

4. Method according to Claim 1, characterised in that the discharged molten material is cooled and granulated.

5. Method according to Claim 4, characterised in that the granules are transported to the feed hopper (16) for the extruder (17) in order to be re-introduced therein.

6. Device for extruding a calibrated profiled section made of thermoplastic polymer on a support (1) and having an extruder (17) supplying molten material, in succession a high-pressure heating pipe (22) and an extrusion head (6) with a feed duct (26) and a nozzle (9) which is moved by a robot (5) on the support, characterised in that the extrusion head (6) has a feed duct (26) through which the molten material circulates and a three-way valve (30) in order to orient it either towards the nozzle (9) or towards the discharge duct (28), and in that the three-way valve (30, 32) is equipped with a space or recess (60, 68) which keeps the feed duct (26) in connection with the nozzle (9) and the discharge duct (28) during the switching in the three-way valve.

7. Device according to Claim 6, characterised in that the three-way valve (30) has a core (49) which is in the shape of a ball with a diameter less than that of the internal space (58) in which it is situated, which forms a space (60) between the core (49) and the wall of the internal space (58), and in that the core (49) is able to move in rotation about a hollow vortex (51) serving for the entry of the molten material and which is extended by an angled duct (52) inside the core (49), the duct opening out, when the core (49) is in one of the extreme positions, on an annular bearing surface (61) forming a seal around one of the outlets (54, 28) and designed so that, when the core leaves its extreme position, the angled duct (52) is partially in communication with the space (60), itself in communication with the other outlet (28, 54).

8. Device according to Claim 6, characterised in that the three-way valve (32) has a core (65) which is substantially cylindrical, in rotation about its axis and having pass through it, perpendicularly to the said axis, a drilling (66) which, in one of the extreme positions of the core, connects the feed duct (26) for the molten material to one of the outlets (54, 28), whilst the other one (28, 54) is closed off by the core (65) itself, and in that the periphery of the cylindrical core (65) has a recess (68) which begins to connect the inlet for the molten material with the other outlet as soon as the core (65) begins its movement.

9. Device according to one of Claims 6 to 8, characterised in that it is designed so that, at the end of one of the extrusion phases, the movable extrusion head (6) puts the discharge duct (28) in communication with a coupling (33) through which the molten material is discharged.

10. Device according to Claim 9, characterised in that the coupling (33) is connected to a high-pressure heating pipe (35) and to a pump (37) which returns the molten material to the extruder (17).

11. Device according to Claim 9, characterised in that the coupling (33) is connected to a system for cooling and manufacturing granules.

12. Device according to Claim 11, characterised in that a pneumatic transporter system (44, 45) takes the granules to the hopper (16) of the extruder (17).

## Patentansprüche

1. Verfahren zum Extrudieren eines kalibrierten Profilstrangs aus einem thermoplastischen Polymer auf eine Untertage (1), bei welchem die Unterlage im Arbeitsbereich eines Handhabungsautomaten (5) positioniert wird, nach welchem Verfahren das Polymer in einem Extruder (17) aufgeschmolzen, über einen beheizten Hochdruckschlauch (22) einem von einem Handhabungsautomaten (5) geführten, beheizten Extrusionskopf (6) zugeführt und auf der Unterlage abgelegt wird,
**dadurch gekennzeichnet**, daß das Polymer zwischen dem Transport und dem Extrudieren ein Dreiwegeventil (30, 32) passiert, um den Materialstrom entweder zu einer Düse (9) oder zu einem Entleerungskanal (28) zu lenken, wobei das besagte Ventil einen Raum oder eine Aussparung (60, 68) umfaßt, mittels deren während des Umschaltens des Dreiwegeventils der Speisekanal (26) mit der Düse (9) und mit dem Entleerungskanal (28) in Verbindung haltbar ist.

2. Verfahren nach Anspruch 1, **dadurch gekennzeichnet**,
daß das abgeleitete geschmolzene Material in den Extruder zurückgeführt wird.

3. Verfahren nach Anspruch 2, **dadurch gekennzeichnet**,
daß das abgeleitete geschmolzene Material mit Hilfe einer Pumpe (37) durch eine Rücklaufleitung (35) in den Extruder zurückgeführt wird.

4. Verfahren nach Anspruch 1, **dadurch gekennzeichnet**,
daß das abgeleitete geschmolzene Material abgekühlt und granuliert wird.

5. Verfahren nach Anspruch 4, **dadurch gekennzeichnet**,
daß das Granulat zum Speisetrichter (16) des Extruders (17) gefördert und dort zurückgeführt wird.

6. Vorrichtung zum Extrudieren eines kalibrierten Profilstrangs aus einem thermoplastischen Polymer auf eine Unterlage (1), mit einem Extruder (17) zum Einspeisen geschmolzenen Materials in Folge in einen beheizten Hochdruckschlauch (22) und einen Extrusionskopf (6) mit einem Speisekanal (26) und einer von einem Handhabungsautomaten (5) über die Unterlage geführten Düse (9), **dadurch gekennzeichnet**,
daß der Extrusionskopf (6) einen von dem geschmolzenen Material durchflossenen Speisekanal (26) sowie ein Dreiwegeventil (30) umfaßt, um das Material entweder zu der Düse (9) oder zum Entleerungskanal (28) zu leiten und
daß das Dreiwegeventil (30, 32) mit einem Raum oder einer Aussparung (60, 68) ausgestattet ist, mittels deren während des Umschaltens des Dreiwegeventils der Speisekanal (26) mit der Düse (9) und mit dem Entleerungskanal (28) in Verbindung haltbar ist.

7. Vorrichtung nach Anspruch 6, **dadurch gekennzeichnet**,
daß das Dreiwegeventils (30) ein kugelförmiges Ventilküken (49) mit einem geringeren Durchmesser als der es aufnehmende Innenraum (58) umfaßt, so daß zwischen dem Ventilküken (49) und der Wand des Innenraums (58) des Ventilgehäuses (49) ein Hohlraum (60) gebildet ist, und
daß das Ventilküken (49) drehbar auf einem hohlen Lagerzapfen (51) gelagert ist, der als Eintrittskanal für den Materialstrom dient und der sich über einen abgewinkelten Kanal (52) innerhalb des Kükens (49) fortsetzt, wobei sich der Kanal in der einen Endstellung des Ventilkükens (49) zu einer ringförmigen Stützfläche (61) hin öffnet, welche einen der Ausgänge (54, 28) abdichtet und so gestaltet ist, daß sich der abgewinkelte Kanal (52), wenn das Ventilküken seine Endstellung verläßt, teilweise in Verbindung mit dem Raum (60) befindet, welcher seinerseits mit dem anderen Ausgang (28, 54) verbunden ist.

8. Vorrichtung nach Anspruch 6, **dadurch gekennzeichnet**,
daß das Dreiwegeventil (32) ein im wesentlichen bezüglich seiner Drehachse zylindrisches Ventilküken (65) aufweist, welches senkrecht zu der Drehachse von einer Bohrung (66) durchdrungen ist, welche in einer der Endstellungen des Ventilkükens den Speisekanal (26) des geschmolzenen Materials mit einem der Ausgänge (54, 28) verbindet, während der jeweils andere Ausgang (28, 54) durch das Ventilküken (65) selbst verschlossen ist, und
daß der Umfang des zylindrischen Ventilkükens (65) eine Aussparung (68) umfaßt, welche eine Verbindung des Eintritts des geschmolzenen Materials mit dem anderen Ausgang einleitet, sobald das Ventilküken (65) seine Bewegung beginnt.

9. Vorrichtung nach einem der Ansprüche 6 bis 8, **dadurch gekennzeichnet**,
daß der bewegliche Extrusionskopf (6) am Ende eines Extrusionsvorgangs den Entleerungskanal (28) an ein Kupplungstück (33) anschließt, über welches das geschmolzene Material abgeführt wird.

10. Vorrichtung nach Anspruch 9, **dadurch gekennzeichnet**,
daß das Kupplungstück (33) an einen beheizten Hochdruckschlauch (35) und an eine Pumpe (37) angeschlossen ist, welche das geschmolzene Material zum Exrtruder (17) zurückfördert.

11. Vorrichtung nach Anspruch 9, **dadurch gekennzeichnet**,
daß das Kupplungstück (33) an ein Kühl- und Granuliersystem angeschlossen ist.

12. Vorrichtung nach Anspruch 11, **dadurch gekennzeichnet**,
daß ein pneumatisches Fördersystem (44, 45) das Granulat zum Trichter (16) des Extruders (17) fördert.
